# DEMANDE DE BREVET EUROPEEN

(11) **EP 0 566 803 A1**
(43) Date de publication de la demande: **27.10.1993**
(21) Numéro de dépôt: 92401112.5
(22) Date de dépôt: 21.04.1992
(51) Int. Cl.: B23H 9/00, B21C 47/12, B23P 15/24

(54) **Procédé de fabrication de filières d'extrusion et filières ainsi obtenues**

(71) Demandeur: EROPOL FINANCE ET DEVELOPPEMENT, F-78540 Vernouillet (FR)
(72) Inventeur: Sergent, Olivier Marie Gilles, F-75116 Paris (FR)
(74) Mandataire: Lordonnois, Michel

(57) **Abrégé**

Dans ce procédé de fabrication de filière d'extrusion comportant chacune un corps principal (4) et un poinçon (12M) de canalisation de la matière, ou des matières extrudées simultanément, monté dans ce corps et pourvu on non d'un noyau (15) d'une part, le corps principal (4) de la filière est pourvu d'un passage central d'extrusion (5) pratiqué, suivant le profil extérieur (17) du produit désiré, au moyen d'une opération de découpe (2) par érosion à fil et, d'autre part, le poinçon interne (12M) au corps de filière, pourvu ou non d'un noyau (15), est obtenu par moulage d'une matière ayant une résistance convenable à la chaleur d'extrusion et une bonne résilience.

## Description

La présente invention se rapporte à un procédé de fabrication de filières d'extrusion ainsi qu'aux filières obtenues par la mise en oeuvre de ce procédé. Plus particulièrement, elle concerne un tel procédé par lequel d'une part, le corps principal de la filière est pourvu d'un passage central d'extrusion pratiqué, suivant le profil extérieur du produit désiré, au moyen d'une opération de découpe par érosion à fil et, d'autre part, le poinçon interne au corps de filière, pourvu ou non d'un noyau, est obtenu par moulage d'une matière ayant une résistance convenable à la chaleur d'extrusion et une bonne résilience telle, qu'entre autres, une résine thermodurcissable ou un produit céramique imperméable.

Dans la technique antérieure, on connaissait, par le brevet DE-A-3.121.697, un procédé de réalisation d'une partie conique sur un outil en découpant une partie de surface plane de celui-ci au moyen d'une opération d'étincelage par fil métallique ou d'érosion à fil. On connaissait également, par le brevet GB-A-954.348, un procédé de fabrication de filières métalliques d'extrusion du type comportant une surface interne cylindrique pourvue d'une rainure hélicoïdale étroite et devant être utilisée comme filière d'extrusion d'un tube pourvu d'une nervure hélicoïdale externe, la rainure hélicoïdale dans l'alèsage cylindrique étant obtenue par désintégration électrique et enlèvement de métal par une opération d'électro-érosion en utilisant une électrode conductrice cylindrique, de même diamètre que le tube, et pourvue d'une nervure hélicoïdale externe. Par ailleurs, par le brevet FR-A-1.437.621, on connaissait un procédé de fabrication de matrices hélicoïdales en stellite, pour filage ou extrusion, qui consiste à utiliser, d'une part, une électrode en cuivre dont le profil hélicoïdal correspond au profit de la pièce à obtenir par extrusion et, d'autre part, un bloc cylindrique en stellite présentant, sur chacune de ses faces supérieure et inférieure, un évidement conique centré sur son axe, un trou central étant pratiqué entre les sommets de ces deux évidements coniques pour le passage d'un fluide diélectrique et, après montage de l'électrode sur la broche d'une machine d'électro-érosion, à percer centralement le bloc de stellite par électro-érosion au moyen de l'électrode animée d'un mouvement hélicoïdal convenable.

Plus récemment on a appris, par le brevet FR-A-2.598.652, un procédé de fabrication de filières d'extrusion qui consiste en premier lieu à réaliser le corps principal d'une filière à partir d'une ébauche, en général cylindrique, comportant un évidement conique interne et pourvue d'une paroi frontale dans laquelle est découpé par une opération d'électro-érosion à fil le passage d'extrusion correspondant au profil extérieur du produit devant être obtenu par extrusion puis, en second lieu, à usiner une électrode, de préférence en cuivre, au moyen d'une autre opération d'électro-érosion à fil, laquelle électrode servira d'outil pour la réalisation du poinçon destiné à être logé dans l'évidement conique du corps de filière et obtenu suite à une opération d'électro-érosion prismatique, cette électrode étant en outre pourvue d'un ou de plusieurs passages découpés suivant le profil extérieur du noyau de poinçon, si celui-ci doit en comporter un, en fonction du ou des canaux internes désirés dans le produit extrudé et, enfin, en troisième lieu, à réaliser l'usinage du poinçon, comme il vient d'être dit, par une opération d'électro-érosion prismatique.

Comme l'inventeur a pu le remarquer, dans tous les procédés antérieurs qui viennent d'être mentionnés, la fabrication de l'électrode en cuivre, ainsi que l'opération d'électro-érosion prismatique en se servant de cette électrode comme outil de réalisation du poinçon du corps de filière, sont extrêmement onéreuses et, de plus, prennent beaucoup de temps à une main-d'oeuvre qui doit être spécialisée. En conséquence, après de nombreuses études et essais, l'inventeur est arrivé à obtenir un prix de revient moindre dans la fabrication de poinçons pour des corps de filières en simplifiant le procédé actuellement connu et qui vient d'être mentionné en dernier lieu, c'est-à-dire en supprimant l'opération d'électro-érosion prismatique et en la remplaçant par une opération de moulage du poinçon en se servant d'une ébauche de forme similaire à celle de ladite électrode en tant que moule et, de plus, en utilisant, pour la fabrication de ce moule, un matériau moins onéreux que le cuivre et tel que, par exemple, du graphite ou de l'aluminium ou encore d'autres produits réputés résistants aux températures de moulage du produit utilisé pour la fabrication de ce poinçon et ne subissant pas de déformations à ces températures.

Ainsi, conformément à la présente invention, le procédé de fabrication d'une fière d'extrusion qui fait l'objet de celle-ci utilise d'une part, le moyen connu dans la technique qui consiste à réaliser le corps principal de la filière à partir d'une ébauche pourvue d'un évidement conique interne et de pratiquer, dans la paroi de fond de cet évidement, par une opération d'électro-érosion à fil, un passage calibré découpé au gabarit du profil extérieur du produit à obtenir par extrusion en tenant compte des conditions de foisonnement de la matière ou des diverses matières devant être extrudées simultanément mais, d'autre part, ce procédé est remarquable par le fait que le poinçon de filière destiné à être monté dans l'évidement conique du corps de filière, et pourvu ou non d'un noyau devant s'engager dans le passage calibré d'extrusion de ce dernier, est obtenu par une opération de moulage pratiquée dans un moule comportant intérieurement la contreforme de ce poinçon, c'est-à-dire usiné dans une ébauche cylindrique pourvue d'une cavité conique de dimensions correspondantes à celles que l'on veut obtenir pour le profit extérieur de ce poinçon, cette cavité conique étant pourvue de rainures radiales pour obtenir, sur la paroi externe de ce poinçon, des nervures de formation entre elles de canaux d'écoulement pour la matière ou les diverses matières extrudées simultanément en direction du passage d'extrusion du corps de la filière. La paroi de fond de cette cavité conique est pourvue en outre d'un évidement de formation de noyau si le poinçon moulé doit en être pourvu, cet évidement ayant un profil intérieur correspondant à celui du canal ou des canaux internes que le produit extrudé doit comporter et une profondeur déterminée de façon que, lorsqu'il sera introduit dans le passage d'extrusion, son extrémité libre soit à l'affleurement de la paroi externe du corps de la filière.

Par ailleurs, comme on l'a énoncé dans le préambule de cette description, afin de réduire au maximum le prix de revient du moule de réalisation du poinçon par rapport à celui de l'électrode en cuivre qui était utilisée jusqu'à présent pour usiner le poinçon au moyen d'une opération d'électro-érosion prismatique, on utilise pour la constitution de ce moule une ébauche en matériau d'un type choisi pour pouvoir être usiné facilement tout en ayant un degré convenable de résilience et une résistance à la chaleur suffisante pour que le moule obtenu ne se déforme pas et ne subisse pas de dégradations lors de l'opération de moulage du poinçon. Entre autres matériaux trouvés adéquats pour réaliser un tel moule on peut citer, à titre d'exemples non limitatifs, l'aluminium et le graphite.

D'autre part, pour réaliser le poinçon on peut utiliser toute matière moulable à base de résine thermodurcissable, c'est-à-dire une matière qui devient très dure après moulage et qui ne pourra pas subir de déformations sous l'effet de la chaleur dégagée lors de l'opération d'extrusion. On peut également réaliser ce poinçon en utilisant comme matériau de moulage un produit céramique imperméable ou encore une matière métallique, sous forme de grains de poudre métallique, qui soit adaptée pour subir un moulage par frittage à chaud ou à froid et qui, après cette opération, soit suffisamment rigide et compacte pour offrir un degré de résilience convenable.

En outre, selon l'invention, lorsque le poinçon que l'on désire fabriquer est de très petite taille et ne peut comporter que des nervures de faible épaisseur pour canaliser la ou les matières extrudées simultanément, la contreforme de moulage de ce poinçon, avant de refermer le moule dans lequel elle constitue le moule inférieur, est pourvue, dans chacune des rainures radiales de sa cavité conique, d'une lame métallique destinée à remplacer chaque nervure radiale externe du poinçon moulé, ces lames se trouvant scellées, après démoulage, sur toute leur hauteur saillant initialement des rainures radiales, dans la matière moulée constituant le corps du poinçon.

A titre documentaire, on peut noter que les fières obtenues par la mise en oeuvre du présent procédé de fabrication, bien qu'adaptables sur certaines têtes d'extrusion classiques, sont plus particulièrement conçues pour être montées en sortie de têtes d'extrusion dites "à veines contrôlées" de plusieurs matières d'extrusion, ces types de tête d'extrusion faisant l'objet des brevets FR-79.31.048 et FR-80.24.721 et pouvant être montées sur n'importe quelle tête d'extrudeuse traditionnelle moyennant l'interposition d'un flasque interface, mais étant plus particulièrement adaptés pour leur montage sur une extrudeuse de multi-matières d'extrusion faisant l'objet du brevet FR-86.07.035.

D'autres caractéristiques du procédé selon la présente invention apparaîtront de la description des schémas ci-joints montrant le développement des phases de ce nouveau procédé comparativement avec celles du procédé appliqué jusqu'à maintenant, ces schémas comprenant:
- La figure 1 qui indique les différentes phases du procédé de fabrication de filières appliqué jusqu'à présent, et
- La figure 2 qui indique les phases simplifiées du présent procédé de fabrication de filières.

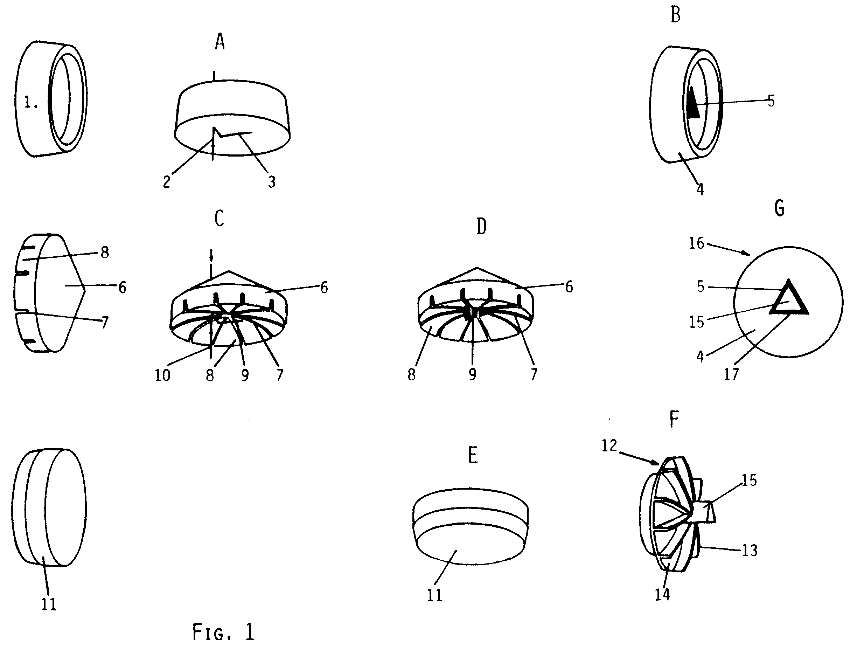

Comme on peut le voir sur la figure 1, le procédé connu utilise, pour la fabrication du corps principal de fière, une ébauche (1) dans laquelle on découpe en phase A, par une opération d'électro-érosion à fil (2), le profil extérieur (3) du produit devant être obtenu par extrusion pour obtenir, en phase a, le corps principal de fière (4) pourvu du passage d'extrusion calibré (5). Ensuite, pour réaliser, dans ce procédé connu, l'électrode d'usinage du poinçon interne au corps de filière, on utlise une ébauche (6) en cuivre pourvue de rainures radiales (7) qui définissement entre elles les secteurs (8) qui usineront des canaux radiaux correspondants lors de la réalisation du poinçon. Comme on le remarque en phase C, lorsque le poinçon de filière doit comporter un ou plusieurs noyaux pour définir un ou plusieurs canaux internes au produit extrudé, un ou plusieurs passages (9), pour réaliser ces ou ces noyaux, sont découpés par une opération d'électro-érosion à fil (10) pour obtenir, en phase D, l'électrode terminée pourvue de son ou ses passages (9) de dimensions correspondantes au profil extérieur du ou des noyaux. Enfin, pour réaliser le poinçon, on utilise une ébauche (11) à laquelle, en phase E, on fait subir une opération d'électro-érosion prismatique pour obtenir, en phase F, un poinçon (12) pourvu d'une part de nervures (13) radiales correspondant aux rainures (7) de l'électrode et, d'autre part, de canaux radiaux (14) correspondant aux secteurs (8) de l'électrode, ces nervures (13) et canaux (14) venant mourir autour du ou des noyaux saillants (15). Comme on le voit en phase G, le montage de ce poinçon (12) dans le corps de filière (4), avec son noyau (15) pénétrant dans le passage (5) de ce corps, fournit une filière (16) à noyau dont le passage d'extrusion (17), ou de filière proprement dite, permet l'extrusion de la paroi d'un profilé tubulaire triangulaire (représenté par un gros trait noir dans la phase G).

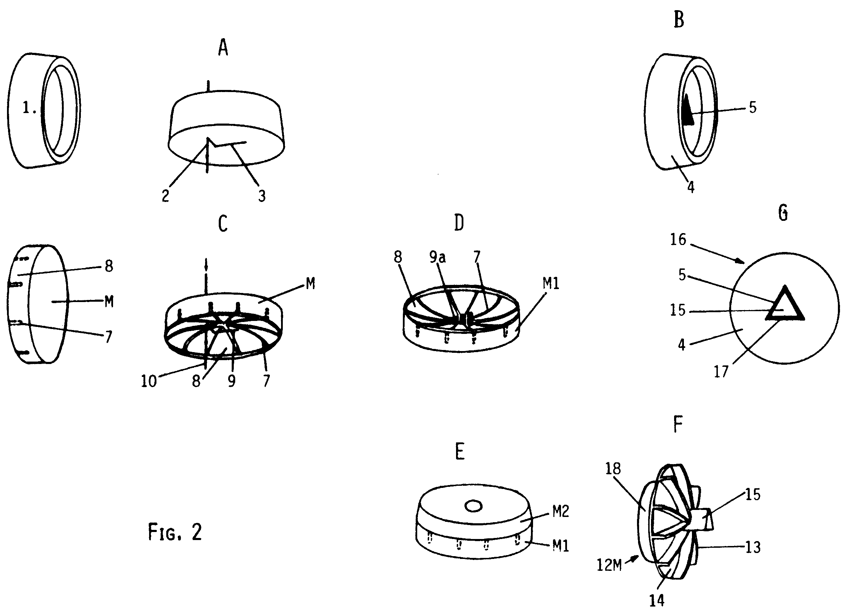

Comme on peut le remarquer, la figure 2 montre les phases simplifiées du nouveau procédé de fabrication de fières par rapport au procédé connu. En ce qui concerne la fabrication du corps principal de filière dans ce nouveau procédé on utilise, comme auparavant, une ébauche (1) à laquelle on fart subir, en phase A, la même opération d'électro-érosion à fil (2) pour obtenir, en phase B, le corps principal de fière (4) pourvu du passage d'extrusion calibré (5).

Par contre, dans ce nouveau procédé, pour la fabrication du moule de poinçon on utilise une ébauche (M), par exemple en métal léger, en aluminium ou en graphite, pourvue, comme précédemment l'ébauche d'électrode (6), de rainures radiales (7) qui définissent entre elles des secteurs (8). De même que pour l'électrode (6), on pratique dans l'ébauche de moule (M), en phase C, une découpe (9) par une opération d'électro-érosion à fil (10), ou toute autre opération adéquate suivant le matériau constituant cette ébauche, afin de fournir, en phase D, une partie inférieure de moule (M1) pourvue d'une cavité (9a) aux dimensions du profil extérieur du noyau (15) et dans laquelle sera moulé ce noyau. Après cela, en phase E, on recouvre la partie inférieure de moule (M1) par une partie supérieure (M2) dans laquelle on aura auparavant pratiqué l'empreinte de moulage de l'épaulement arrière (18) du poinçon. Enfin, comme on le voit en phase F, après remplissage de l'ensemble de moule (M1-M2) en utilisant une matière moulable convenable, par exemple à base de résine thermo-durcissable, ou bien un produit céramique imperméable, ou encore une poudre métallique apte au frittage à chaud ou à froid, on obtient un poinçon moulé (12M) pourvu de nervures radiales (13) corespondant aux rainures (7) et définissant entre elles des canaux (14) venant aboutir autour du noyau saillant (15) moulé dans le cavité (9a).

En outre, comme on l'a mentionné précédemment, lorsque l'on doit obtenir par moulage des poinçons de très petite taille, donc pourvus de nervures radiales de faible épaisseur pour permettre la canalisation entre elles de la ou des matières extrudées simultanément, ces nervures sont remplacées par des lames métalliques qui sont introduites, avant l'opération de moulage alors que le moule est encore ouvert, dans les rainures radiales de la cavité conique de la contreforme du poinçon, constituant la partie inférieure du moule, si bien qu'après moulage les parties de ces lames saillant des rainures se trouvent scellées et encastrées dans la matière de moulage du corps du poinçon.

On comprend aisément que, de la même manière qu'antérieurement, ainsi qu'indiqué en phase G, le montage du poinçon moulé (12M) dans le corps de fière (4) fournit une filière (16) à noyau, semblable à celle obtenue en appliquant le procédé antérieur connu, mais moins onéreuse à fabriquer en appliquant le nouveau procédé selon la présente invention car, entre autres, l'opération d'électro-érosion prismatique de réalisation du poinçon est supprimée et remplacée par une opération de moulage comparativement beaucoup moins onéreuse et il n'est plus nécessaire d'utiliser une ébauche de poinçon qui revenait beaucoup plus chère que la quantité de produit moulable utilisée.

## Revendications

1. Procédé de fabrication de filières d'extrusion comprenant chacune un corps principal (4) et un poinçon (12M) de canalisation de la matière, ou des matières extrudées simultanément, monté dans ce corps et pourvu on non d'un noyau (15), lequel procédé consiste à réaliser le corps principal de la filière à partir d'une ébauche pourvue d'un évidement conique interne et de pratiquer, dans la paroi de fond de cet évidement, par une opération d'électro-érosion à fil, un passage calibré découpé au gabarit du profil extérieur du produit à obtenir par extrusion en tenant compte des conditions de foisonnement de la matière ou des diverses matières devant être extrudées simultanément, ce procédé étant caractérisé par le fait que le poinçon (12M) de filière destiné à être monté dans l'évidement conique du corps de filière (4), et pourvu ou non d'un noyau (15) devant s'engager dans le passage calibré (5) d'extrusion de ce dernier, est obtenu par une opération de moulage pratiquée dans un moule (M1-M2) comportant intérieurement la contreforme de ce poinçon, c'est-à-dire usiné dans une ébauche cylindrique (M) pourvue d'une cavité conique de dimensions correspondantes à celles que l'on veut obtenir pour le profil extérieur de ce poinçon, cette cavité conique étant pourvue de rainures radiales (7) pour obtenir, sur la paroi externe de ce poinçon (12M), des nervures (13) de formation entre elles de canaux d'écoulement (14) pour la matière ou les diverses matières extrudées simultanément en direction du passage d'extrusion du corps de la filière.

2. Procédé selon la revendication 1, caractérisé par le fait que la paroi de fond de la cavité conique de la partie inférieure (M1) du moule est pourvue d'un évidement (9a) de formation de noyau (15) si le poinçon moulé (12M) doit en être pourvu, cet évidement ayant un profil intérieur correspondant à celui du canal ou des canaux internes que le produit extrudé doit comporter et une profondeur déterminée de façon que, lorsqu'il sera introduit dans le passage d'extrusion (5), son extrémité libre soit à l'affleurement de la paroi externe du corps (4) de la filière.

3. Procédé selon l'une ou l'autre des revendications 1 ou 2, caractérisé par le fait que, pour constituer la partie inférieure (M1) du moule de réalisation du poinçon (12M) on utilise une ébauche (M) en matériau d'un type choisi pour pouvoir être usiné facilement tout en ayant un degré convenable de résilience et une résistance à la chaleur suffisante pour que le moule obtenu ne se déforme pas et ne subisse pas de dégradations lors de l'opération de moulage du poinçon (12M).

4. Procédé selon la revendication 3, caractérisé par le fait que le matériau utilisé pour la fabrication de la partie inférieure (M1) du moule est de l'aluminium.

5. Procédé selon la revendication 3, caractérisé par le fait que le matériau utilisé pour la fabrication de la partie inférieure (M1) du moule est du graphite.

6. Procédé selon l'une quelconque des revendications 1 à 3, caractérisé par le fait que, pour réaliser le poinçon (12M), on utilise une matière moulable à base de résine thermodurcissable, c'est-à-dire une matière qui devient très dure après moulage et qui ne pourra pas subir de déformations sous l'effet de la chaleur dégagée lors de l'opération d'extrusion.

7. Procédé selon l'une quelconque des revendications 1 à 3, caractérisé par le fait que, pour réaliser le poinçon (12M), on utilise comme matériau de moulage un produit céramique imperméable.

8. Procédé selon l'une quelconque des revendications 1 à 3, caractérisé par le fait que, pour réaliser le poinçon (12M), on utilise une matière métallique, sous forme de grains de poudre métallique, qui soit adaptée pour subir un moulage par frittage à chaud ou à froid et qui, après cette opération, soit suffisamment rigide et compacte pour offrir un degré de résilience convenable.

9. Procédé selon la revendication 1, conçu pour la fabrication de filières d'extrusion dans lesquelles le poinçon est de très petite taille et ne peut comporter que des nervures de faible épaisseur pour canaliser la ou les matières extrudées simultanément, ce procédé comportant le même processus de fabrication du corps principal et de la contreforme de moulage du poinçon, tel qu'énoncé dans la revendication 1, mais étant caractérisé par le fait que des lames métalliques sont introduites dans les rainures radiales (7) de la cavité conique de la contreforme avant de mettre en place la partie supérieure (M2) du moule, si bien que, lors de l'opération de moulage, les lames se trouveront en partie scellées dans la matière de moulage et leur partie engagée auparavant dans les rainures radiales saillera de cette matière de moulage lors du démoulage du poinçon pour constituer les nervures (13) de formation entre elles de canaux d'écoulement pour la ou les matières extrudées.
